# EUROPEAN PATENT APPLICATION

(11) **EP 3 279 102 A1**
(43) Date of publication of application: **07.02.2018**
(21) Application number: 16182639.1
(22) Date of filing: 03.08.2016
(51) Int. Cl.: B65D 5/06

(54) **A PACKAGING MATERIAL, A PACKAGE, AND A METHOD FOR MANUFACTURING A PACKAGING MATERIAL**

(71) Applicant: Tetra Laval Holdings & Finance S.A., 1009 Pully (CH)
(72) Inventor: BERGHOLTZ, Lars, 263 51 HÖGANÄS (SE); PALM, Lars, 232 52 Åkarp (SE)
(74) Representative: Tetra Pak - Patent Attorneys SE

(57) **Abstract**

The invention relates to a packaging material (1) to be formed into a package (201). The packaging material (1) comprises a support layer (3), a mark (20) comprising magnetizable material arranged on said support layer (3), wherein said magnetizable material is provided at least to some extent as an optical pattern to be read by an optical reading device () such that said mark (20), upon magnetization of the magnetizable material, forms a magnetic mark (30) and an optical mark (40).

## Description

### Technical field

The present invention relates to a packaging material, a package produced by said packaging material, and to a method for manufacturing a packaging material.

### Background art

In the food packaging industry packaging material is formed into a package, and food is packaged into the package. The package is then distributed to storing locations for further distribution to retail stores where the food is sold to the end consumer.

The packaging material may comprise a main portion intended to form the front side, the back side, and one or more of lateral sides of the package, and a top and/or bottom portion intended to form the top and bottom portion of the package, respectively. The different portions and/or sub-portions are often separated by crease lines about which the portions of the packaging material is to be folded in order to form the final package.

Usually, packages can be formed, filled and sealed in a continuous operation. The process may for example comprise the steps of forming a web or a blank of packaging material into a tube by joining the longitudinal edges of the web or the blank such that they overlap. Thereafter, the overlap of the longitudinal edges may be sealed by e.g. welding. In this process, the tube is filled with the intended food product and is thereafter divided into individual packages by repeated transversal seals of the tube at a predetermined distance from each other below the product level in the tube. The packages are separated from the tube by incisions along the transversal seals and given the desired geometric configuration, normally parallelepipedic, by folding along the prepared crease lines in the packaging material.

Packages for sensitive liquid food, for example milk or juice, can be produced from sheet-like blanks or prefabricated blanks of packaging material. In a first step, the blank is folded and sealed as explained above in order to form a closed end by means of e.g. heat-sealing. The tube can thus be filled with liquid food through an open end of the tube, while the liquid food can be withheld in the tube by means of the closed end. When the tube has been filled to a predetermined level, the open end is closed and sealed. An example of a package produced from sheet-like and folded blanks is the conventional so-called gable-top package. There are also packages of this type which have a molded spout comprising a cap-neck combination made of plastic.

Guiding marks are sometimes provided to guide operations when finishing the package, which may involve forming, sealing, folding, etc. Such guiding marks are sometimes referred to as register marks. The register mark may be provided during printing of the packaging material, where e.g. decor or product information is printed on the packaging material. The register mark thus forms a detectable item on the exterior side of the packaging material, i.e. the side of the packaging material which is intended to form the outside, or exterior side, of the final package. The register mark is normally provided at a well-defined position, e.g. in relation to the lateral edge of the packaging material. Once the register mark is detected it is thus possible to determine the exact position of the packaging material relative machine components.

A problem with such register marks is that they consume a non-negligible area of what becomes the exterior of the package. Therefore it has been suggested to provide the register mark as a magnetic mark on the inner side of the packaging material, i.e. the side of the packaging material intended to form the interior side of the final package.

From this concept of magnetic marking on the inner side of the packaging material it has also been suggested to add further magnetic marking on the inner side storing complex data, e.g. representing information from which the packaging material can be uniquely identified.

In some cases it is desired to access the information of the magnetic mark during manufacturing of the packages. For example, if the packaging material is suddenly intended to enclose a new product the information of the magnetic marking could provide useful instructions regarding the suitability of such use.

In order to access the information a magnetic reader and related decoding algorithms are required. Scanning the magnetic marking storing the complex data is however rather time consuming and information may even get lost due to the manufacturing process. Non-planar movement of the packaging material may be one reason why data density may be kept relatively low in order to enhance reading and decoding.

There is thus a need for a packaging material with an improved marking.

### Summary of the invention

It is an object of the present invention to improve the current state of the art, to solve at least some of the above problems, and to provide an improved packaging material. These and other objects are achieved by a packaging material, a package for retaining a food product produced by such packaging material, and a method for manufacturing a packaging material.

According to a first aspect of the present invention, a packaging material to be formed into a package is provided. The packaging material comprises a support layer. A mark comprising magnetizable material is arranged on said support layer, wherein said magnetizable material is provided at least to some extent as an optical pattern to be read by an optical reading device such that said mark, upon magnetization of the magnetizable material, forms a magnetic mark and an optical mark.

Hereby, the area of what becomes the exterior of the package is better utilized as the magnetic mark at least partly forms the optical mark. Thus, the optical mark and the magnetic mark at least partly overlap. Furthermore, by letting the magnetic mark at least partly form the optical mark the two different types of marks are provided as a combined mark. The combined mark may be used both as a magnetic mark (further explained below) and as an optical mark (further explained below).

In an embodiment the optical mark comprises a plurality of optically detectable structures forming said optical pattern. The optically detectable structures are preferably visible, i.e. detectable for a human eye. This means that a regular camera or other readily available image recorder may be used to capture an image of the optical pattern.

Preferably, the optical pattern forms a machine-readable representation of information data. Hence the optical pattern provides coded information, accessible only by proper decoding.

In an embodiment the optically detectable structures are separated. Separation may be achieved by providing structures, i.e. voids, being free from magnetizable material.

In another embodiment the optically detectable structures are separated by structures formed by magnetizable material, and wherein the thickness of said separation structures is less than the thickness of the optically detectable structures. The relative difference of thickness between the optically detectable structures and the separation structures is for this embodiment large enough to create a detectable color contrast.

The optical pattern of said optical mark may form a bar code, or a two-dimensional code.

The optical mark may extend across only a part of the mark of magnetizable material, or it may extend across the entire mark of magnetizable material.

In order to allow for position information the mark of magnetizable material has a fixed position relative a lateral edge of said packaging material.

The mark of magnetizable material may in other embodiments have a fixed position relative at least one preparation feature, such as a crease line, provided on the packaging material.

The support layer may be a paperboard layer, thus making the packaging material particularly suitable to form a liquid food package.

The transparent layer is intended to form the exterior of the package being produced by said packaging material. Hence the optical mark will be visible and detectable from the outside of the package, which allows reading and decoding of the optical mark also after manufacturing of the package.

The magnetizable material may preferably be magnetized in order to activate the magnetic mark.

According to a second aspect a package for retaining a food product is provided. The package is produced by a packaging material according to the first aspect, wherein the packaging material is folded and sealed to form said package.

The mark of magnetizable material may be arranged on a top portion, a bottom portion, and/or a side portion of said package.

In an embodiment the package comprises a plurality of marks of magnetizable material, wherein the magnetizable material of at least one of said marks is provided at least to some extent as an optical pattern to be read by an optical reading device such that said mark, upon magnetization of the magnetizable material, forms a magnetic mark and an optical mark.

According to a third aspect, a method for providing a packaging material to be later formed into a package is provided. The method comprises providing a support layer; and applying a mark of magnetizable material on said support layer, whereby said magnetizable material is provided at least to some extent as an optical pattern to be read by an optical reading device such that said mark, upon magnetization of the magnetizable material, forms a magnetic mark and an optical mark.

In an embodiment applying said mark comprises i) applying a mark not forming an optical pattern to be read by the optical reading device, and ii) removing parts of said mark whereby the remaining parts of said mark form said optical pattern.

Removing parts of said mark may be performed by laser ablation.

A plurality of optically detectable structures forming said optical pattern may be applied to form said mark.

The method may further comprise covering said mark with a laminate layer.

In an embodiment, the method further comprises magnetizing the magnetizable material of said mark.

According to at least one example embodiment, the packing material may comprise more than one magnetizable mark. For example, a first magnetizable mark may be a master mark providing information on positioning of the part of the packaging material (or web of packaging material) intended to form the package in order for facilitating operations for finishing the package. Furthermore, a second magnetizable mark may be associated with a feature for enhancing finishing of the package, such that an operation associated with the feature and to be performed for finishing the package is enabled to gain information on positioning of the part of the packaging material (or web of packaging material) intended to form the package.

The magnetic mark may be provided with a magnetizable field pattern which may form the master mark and/or the second magnetizable mark.

The magnetizable mark (such as e.g. a magnetizable pattern), for example the first and/or the second magnetizable mark, may be provided as a machine-readable representation of information data. The information data may hold information from which the packaging material can be uniquely identified, preferably information from which a part of the material can be uniquely identified. The information data may be represented as a modulating scheme of the magnetic field of the magnetic pattern, wherein the modulating scheme comprises any of a group comprising phase shift keying, frequency shift keying, amplitude shift keying, quadrature amplitude modulation, and pulse width modulation.

The packaging material may define a transversal direction being parallel to an imaginary rotational axis of a supply roll when a web of the packaging material is rolled onto it, and a longitudinal direction perpendicular to the transversal direction, wherein at least one of the magnetizable marks 30 may be provided as a strip essentially along the longitudinal and/or the transversal direction of the packaging material.

According to at least one example embodiment, said optical mark is a predetermined optical pattern having at least two distinguishable optical sub-patterns, and wherein said magnetizable mark comprises at least one of said optical sub-patterns.

Stated differently, said magnetizable mark may according to one example embodiment be comprised in at least one of said optical sub-patterns.

It should be understood that the term predetermined optical pattern is to be understood as an optical pattern which has been predetermined in accordance with what an optical reading device can read, i.e. the pattern is not a randomly created optical pattern.

According to at least one example embodiment, said at least two distinguishable optical sub-patterns comprises a first optical sub-pattern and a second optical sub-pattern, said first and second optical sub-patterns being optically distinguishable from each other, and wherein said magnetizable mark comprises at least said first and/or said second optical sub-pattern.

For example, the magnetizable mark may comprise magnetic sub-patterns of at least two different colors, or of at least two different shades of a color, or of black respective white. Preferably, the magnetizable mark comprises a first magnetizable sub-pattern which makes up the dark, or black optical sub-patterns of the optical mark, while a second magnetizable sub-pattern makes up the light, or white optical sub-patterns of the optical mark. In such cases, the first optical sub-pattern is formed by the first magnetizable sub-pattern, and the second optical sub-pattern is formed by the second magnetizable sub-pattern.

In another example, the optical sub-pattern being of a lighter color, or of a lighter shade of a color, or of white, is not formed by a magnetizable sub-pattern, but rather by the support layer, or by a separate layer/material applied onto or into the protective layer arranged on top of the magnetizable mark. In such cases, the optical sub-pattern being of a darker color, or of a darker shade of a color, or of black, is formed by the magnetizable mark.

According to at least one example embodiment, the outer surface of the support layer is provided with the magnetizable mark.

Hereby, the optical mark will be visible from an outside of the package. Thus, an optical reading device may thereby be able to read the optical mark. In other words, the provision of a magnetizable material which will eventually provide the magnetic mark is preferably applied on a side or surface of the support layer facing towards the intended exterior of the package to be formed.

The magnetic mark, i.e. the magnetizable material (such as a magnetisable ink when dried) is preferably 4 µm and 10 µm thick, preferably between 6 µm and 8 µm.

According to at least one example embodiment, said magnetizable mark covers a first area of said packaging material, and said optical mark covers a second area of said packaging material, and wherein the two areas at least partly overlaps.

Thus, the area of what becomes the exterior of the package is better utilized as the first area having the magnetizable mark at least partly overlaps with the second area having the optical mark.

According to at least one example embodiment, said first area is larger than the second area.

According to at least one example embodiment, said first area is more than 10 %, or more than 20 %, or more than 50 %, or more than 100 % larger than second area. Thus, the optical mark may be made smaller compared to the magnetizable mark.

According to at least one example embodiment, the protective layer is transparent or semi-transparent. According to at least one example embodiment, the protective layer is an outermost layer from e.g. a thermoplastic polymer, functioning as at least liquid barrier layers and as heat sealable material. It should be noted that the protective layer also provides for a protection of the magnetizable mark, and prevents, or at least reduces the risk, of having the magnetizable mark worn down or scraped off.

The protective layer may e.g. be a plastic coating. Here, the term plastic coating should be interpreted as any coating including suitable polymers for food containers.

Thus, according to at least one example embodiment, the package material is a multi layer material, having a support layer or bulk layer (such as a paperboard layer), and an outermost, transparent plastic layer arranged at least onto said magnetizable mark, whereby said outer protective layer is arranged to form an outer side of the packaging material, and wherein said packaging material further comprises at least one inner thermoplastic layer arranged on the side of the bulk layer opposite to said outer protective layer, thus forming an inner side of the packaging material. The packing material can also comprise a barrier layer, such as a gas and oxygen barrier, such as a metal layer.

According to at least one example embodiment, said predetermined optical pattern is arranged on a top portion, a bottom portion, and/or a side portion of said package.

Alternatively or additionally, the optical sub-pattern being of a lighter color, or of a lighter shade of a color, or of white, is formed by a separate material applied onto or into the protective layer covering the magnetizable mark. Such separate material would then be applied in a pattern which allows for parts of the magnetizable mark to be seen from an exterior of the package (and which also prevents for parts of the magnetizable mark to be seen from an exterior of the package). In such cases, the optical sub-pattern being of a darker color, or of a darker shade of a color, or of black, is formed by the material of the magnetizable mark, or a magnetic sub-pattern which is visible from the exterior of the package on those locations where the separate material has not been applied.

According to at least one example embodiment, the method comprises the step of printing on the packaging material. For example, the magnetizable material may be applied to the support layer by printing. Additionally other printing, such as printing for decoration or package information may be included in the step of printing. Preferably, the printing is performed prior to the step of laminating the support layer (i.e. the step of covering the magnetizable mark with a protective layer).

It should be understood that the magnetizable mark may be applied onto the substrate layer such that it covers e.g. between 1 % and 10 % of the total area of the substrate layer. Alternatively, the magnetizable mark may cover more than 10 %, such that more than 20 %, or 30 %, or 40 % or 50 %, or 60 %, or 70 %, or 80 %, or 90 %.

The predetermined optical pattern may be any pattern which is readable by an optical reading device and its associated control unit. The predetermined optical pattern may e.g. be a bar code (i.e. be comprised of elongated stripes) or a QR-code (i.e. be comprised of small squares and/or rectangles). Although less likely the predetermined optical pattern may comprise a zigzag pattern, a striped pattern, a checked pattern, and/or e.g. of dots and/or waves.

The method may further comprise a step of applying a clay-coating on the support layer. The step of applying the clay-coating is preferably performed prior to the step of applying a portion of magnetizable material. Hereby, a printable surface is provided. According to at least one example embodiment, further printing of the packaging material is made after applying the magnetizable material, e.g. by printing through or over the magnetizable material.

### Brief description of the drawings

The above objects, as well as additional objects, features and advantages of the present invention, will be more fully appreciated by reference to the following illustrative and non-limiting detailed description of preferred embodiments of the present invention, when taken in conjunction with the accompanying drawings, wherein:
Fig. 1 is a perspective view of a packaging material in accordance with at least one embodiment of the invention;
Fig. 2a is a cross sectional view of a packaging material in accordance with at least one embodiment of the invention.
Fig. 2b is a cross sectional view of a packaging material in accordance with another embodiment of the invention.
Fig. 3 is a schematic view of a filling machine used for manufacturing a package according to an embodiment.
Fig. 4 is a perspective view of a package produced by a packaging material in accordance with at least one embodiment of the invention.
Fig. 5a shows a magnetizable mark of a packaging material according to an embodiment.
Fig. 5b shows a magnetizable mark of a packaging material according to another embodiment.
Fig. 6 is a schematic view of a method according to an embodiment. Detailed description of preferred embodiments of the invention

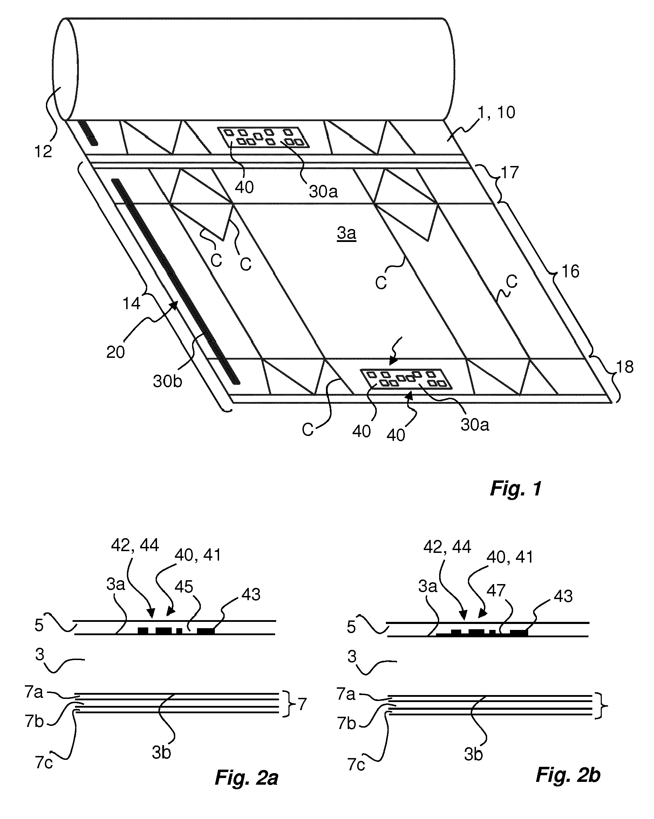

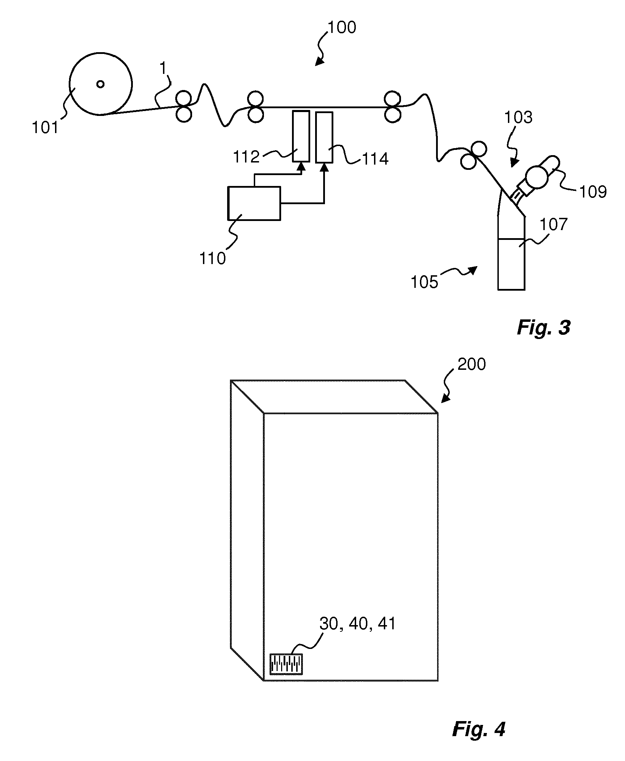

Fig. 1 shows a packaging material 1, intended to be formed into a package 100 (see Fig. 4) in accordance with one embodiment of the present invention. In Fig. 1, the packaging material 1 is shown as a web 10, which is partly rolled up on a packaging material roller 12. Thus, the web 10 of the packaging material 1 in Fig. 1 may be formed into a plurality of packages. However, to facilitate the understanding, the subsequent sections describing Fig. 1 will mostly be directed to the portion 14 of the web 10 which is intended to be formed into a single package. This portion 14 of the packaging material 1 will from hereon be referred to as a packaging material blank. This packaging material blank 14 is preferably arranged in a repeatable manner on the web 10.

The packaging material 1 comprises a support layer 3 and a laminate layer 5 (which are better seen in Figs. 2a-2b). The laminate layer 5 is arranged on top of and covers the support layer 3. In the embodiment shown in Fig. 1, the packaging material 1, or rather the packaging material blank 14, comprises different portions, such as a main portion 16, a top portion 17, and a bottom portion 18. These portions 16, 17, 18 will e.g. form different sides of the package 100 into which the packaging material 1 is to be formed.

For example, the main portion 16 comprises at least five sub-portions which will become the front side, the lateral sides, and the back side of the package 100 after the packaging material 1 has been formed into a package. In a similar manner, top portion 17 and the bottom portion 18 comprise sub-portions which will be part of the top side of the package 100 and bottom side of the package 100, respectively. The different portions on the packaging material blank 14 are separated by crease lines C (of which only some are indicated by a reference letter C in Fig. 1) about which some of the portions of the packaging material 1 is to be formed and folded.

As will further be described with reference to Figs. 2a-2b the support layer 3 comprises a first surface 3a, which is to face an outside of the formed package 100. However as is shown in Fig. 1 two portions 20a, 20b of magnetizable material are arranged on the support layer 3, on the first surface 10a, thus forming magnetizable marks 30a, 30b. Once magnetized, the magnetizable marks 30a, 30b may be used to guide operations when finishing the package 100, such as e.g. when forming, sealing, or folding the packaging material 1 into a package 100. The packaging material 1 further comprises an optical mark 40 which may be read by an optical reading device (see Fig. 4).

The magnetizable mark 30a is preferably provided as a register mark, i.e. a mark for providing position information of the packaging material 1 during manufacturing. The magnetizable mark 30b could e.g. be provided as a separate register mark, or as information marking forming a machine-readable representation of information data.

In Fig. 1, the optical mark 40 is provided as an optical pattern 41 forming part of the magnetizable mark 30a. It should however be realized that the optical mark 40 could instead be provided as forming part of the magnetizable mark 30b. In another embodiment one optical mark 40 is provided as an optical pattern forming part of the magnetizable mark 30a, while one optical mark 40 is provided as an optical pattern forming part of the magnetizable mark 30b.

The optical pattern 41 is preferably distinguishable by a color contrast between a first and second sub-pattern 42, 44, as will be further described with reference to Figs. 2a-2b.

As seen in Fig. 1, the magnetic mark 30a covers a first cover area of the packaging material 1, and the optical mark 40 covers a second cover area of the packaging material 1. The fist cover area is here larger than the second cover area. Preferably the first cover area at least partly overlaps the second cover area such that the magnetic mark 30a and the optical mark 40 at least partly overlap.

As the laminate layer 5 covers the magnetic mark, and thereby comprises (or houses) the optical mark 30, the laminate layer is preferably transparent or semi-transparent, in order for the part of optical mark 30 which is defined by the magnetic mark 20 (in Fig. 1, that is the first optical sub-pattern 32) to be visible from an exterior of the package.

Now turning to Figs. 2a-2b embodiments of a packaging material 1 are shown. The package material 1 is a multi layer material 1 comprising a support layer 3, here illustrated as a bulk barrier layer 3, having a first surface 3a, and a laminate layer 5, here illustrated as an outer plastic laminate layer 5. A magnetizable mark 30 is arranged on the first surface 3a, and the laminate layer 5 is arranged on top of the support layer 3 in order to cover the magnetizable mark 30.

Hereby, the outer plastic laminate layer 5 is arranged to form an outer side of the packaging material 1, and later an outer side of the final package 100. The first surface 3a of the support layer 3 is thus visible through the outer plastic laminate layer 5 from the outer surface of the packaging material 1.

As is shown in Figs. 2a-2b, the packaging material 1 further comprises an inner plastic laminate layer 7 arranged on a second surface 3b of the support layer 3, opposite to the first surface 3a, thus forming an inner side of the packaging material 1 and later an inner side of the final package 100.

Preferably the inner plastic laminate layer 7 comprises a first adhesion layer 7a arranged in contact with the second surface 3b of the support layer 3. A barrier film 7b, such as an aluminium foil, may be arranged on top of th eadhesion layer 7a, whereby the opposite side of the barrier film 7b is covered by a plastic laminate layer 7c to be in contact with product enclosed by the final package 100.

In some embodiment, at least one of the plastic laminate layers 5, 7 thus forms a gas and/or liquid barrier. However, it should be noted that the packaging material 1 may comprise only the support layer 3, the laminate layer 5 and the portion 20 of magnetizable material.

The support layer 3 may comprise a light barrier property or, in other words, be of a very high opacity. The term light barrier property may correspond to any physical characteristic of the bulk layer to significantly absorb a portion of incident light of one or more wavelength. Consequently, the support layer 3 may comprise material for which the absorption coefficient for the one or more defined wavelength is very high.

Such light absorption properties can be achieved by selection of proper material a described below. As the transmission rate of light is also a function of thickness of the material, higher thickness can reduce transmission and increase absorption.

For instance, the support layer 3 may comprise a paper or carton based material of a certain thickness. Such material may shield at least partly light from passing, thereby absorbing a portion of incident light. The paper or based material, also called paper or carton board used herein comprises a grammage between 60-480 g/m2, depending on the requirement for different types of packages. The grammage of the paperboard is assessed in accordance with ISO 536. Grammage expresses weight per unit area and is measured in g/m2. The paper or paperboard normally has a thickness between 50-660 µm, particular between 90-110 µm or 200-500 µm, such as 250-350 µm and is appropriately selected in order to obtain the desired stiffness suitable for the type of package or packaging container and intended to contain a food product. It is however also conceivable that the support layer 3 of the packaging material 1 may also comprise a polymer bulk layer. For the various additional plastic laminate layers 5, 7 as well as any adhesive layers to connect plastic laminate layers to the support layer 3, various polymer materials can be used, such as polyolefins, such as polyethelene or polypropylene polymers, such as various low density polyethylenes (LDPE) or linear low density polyethylenes (LLDPE) or blends with such polymers in the majority.

Now turning to Fig. 2a the magnetizable mark 30 is forming an optical pattern 41 defining an optical mark 40. The optical pattern 41 comprises two distinguishable optical sub-patterns 42, 44 in the form of a first optical sub-pattern 42 and a second optical sub-pattern 44. The first and second optical sub-patterns 42, 44 are optically distinguishable from each other as the first optical sub-pattern 42 is comprised of detectable structures 43 of the magnetizable mark 30 (i.e. typically in a dark color, or a dark shade of a color such as dark gray, or in black), and as the second optical sub-pattern 44 is comprised of a portion of the packaging material 1 not being provided with a magnetizable mark 20 (i.e. typically in a light color, or a light shade of a color such as light gray, or in white). In Fig. 2a, the second sub-pattern 44 is provided as voids 45. Hence, the optical mark 40 is at least partly defined by the magnetizable mark 30. The voids 45 of the second optical sub-pattern 44 will thus be optically distinguishable from the detectable structures 43 of the first optical sub-pattern 44 such that the voids 45 and the detectable structures 43 are visible when looking at the packaging material 1 from above (i.e. in a direction from the laminate layer 5 towards the support layer 3).

The voids 45 may have been created for example by removing selected parts or portions of the magnetizable material. Alternatively, detectable structures 43 have been provided by applying the magnetizable material according to the optical pattern 41, i.e. in a two-dimensional pattern.

Hence, the first and second optical sub-patterns 42, 44 are optically distinguishable from each other as the first optical sub-pattern 42 is comprised of a portion of said magnetic mark 30. To complement the first optical sub-pattern the second optical sub-pattern 44 is comprised of a portion of the packaging material 1 having separation structures 45 (i.e. typically in a light color, or a light shade of a color such as light gray, or in white). Hence, the optical mark 30 is at least partly defined by the magnetic mark 20. The second optical sub-pattern 44 may e.g. comprise a plurality of separate squares and rectangles formed by a portion of the support layer 3 (i.e. if the magnetizable material has been removed at the locations of the second optical sub-pattern 44) or any other possibly visible layer being present in the packaging material 1 (such as e.g. a clay-coating layer). The second optical sub-pattern 44 may also be comprised of a separate material which has been applied to the packaging material 1 in order to complement the detectable structures 43 of the first sub-pattern 42.

In Fig. 2b another embodiment of a packaging material 1 is shown. Although the structural construction of the packaging material 1 is identical to the embodiments described with reference to Fig. 2a, the optical mark 40 shown in Fig. 2a differs in the configuration of the separation structures. Here, the detectable structures 43 of the first optical sub-pattern are optically distinguishable due to the provision of the separation structures 47 which are provided as structures of magnetizable material, i.e. the same material as the detectable structures 43. However, the thickness of the separation structures 47 is substantially less than the thickness of the detectable structures 43 such that a color contrast between the detectable structures 43 and the separation structures 47 is accomplished.

As explained previously with reference to Fig. 1 the packaging material 1 may be provided in the form of a web and is thus formed into a plurality of packages. In this case, the packaging material 1 preferably comprises a plurality of magnetizable marks 30 being provided as at least one magnetizable mark 30 per package to be formed. Correspondingly, the packaging material 1 thus also comprises a plurality of optical marks 40 provided as at least one optical mark 40 per package to be formed. For each package, an optical mark 40 is provided as an optical pattern 41 forming part of a magnetizable mark 30.

The optical mark 40, and thus the magnetizable mark 30, may be arranged beneath the protective layer 5 on the exterior of the package, such that at least a part of the optical mark 40 is visible when looking at the exterior of the package. Thus, it should be understood that an additional outer layer may be provided on top of the protective layer 5.

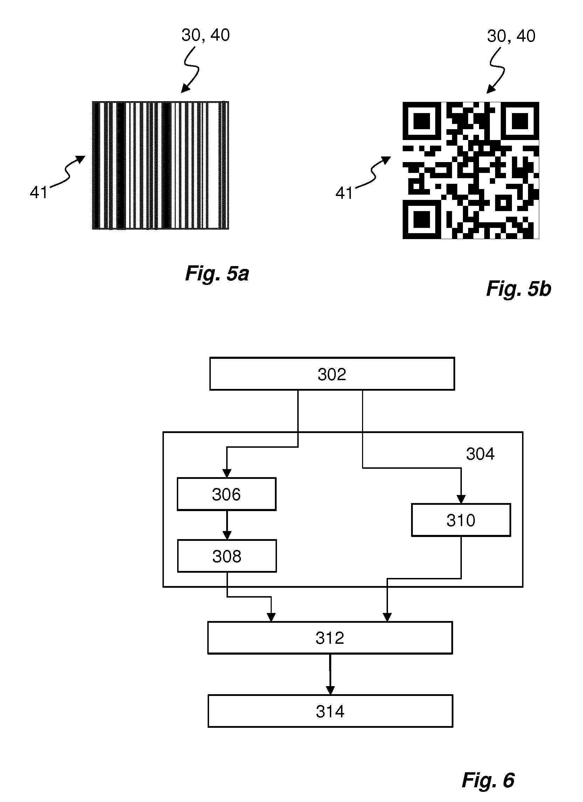

By stating that the optical mark 40 is adapted to be read by an optical reading device, it should be understood that the optical mark 40 contains information which can be read by an optical device. Such optical mark may for example be a bar code, a QR code or any other type of similar optical mark as will be further described with reference to Figs. 5a-b. Thus, the optical reading device can e.g. be a bar code reader or a QR reader or another optical reader for reading an optical mark 40.

The magnetizable mark 30 may be used to guide operations when finishing the package, such as e.g. when forming, sealing, folding, the packaging material into a package. Hence, the magnetizable mark 30 may be referred to as a guiding mark or a register mark.

Now turning to Fig. 3 a very schematic view of a filling machine 100 is shown. The filling machine 100 includes a supply 101 of packaging material 1; the supply 101 is here represented by a reel onto which a web of packaging material 1 is provided.

The packaging material 1 is fed through the filling machine 100 and the packaging material 1 is guided to a filling station 103 arranged at the end of the transport path. The filling station 103 includes a forming and sealing station 105 being configured to form the web of packaging material 1 into a tube 107, and to seal the bottom end of the tube 107. A filling nozzle 109 is also provided to fill the tube 107, having its closed bottom end, with a product. The filling station 103 may also include a cutter (not shown) configured to separate a finished (and filled) package from the tube 107. In practice, this means that when the sealing station 105 is activated to form a transversal seal of the tube 107, the seal will form an upper end seal for one package, and the bottom end seal for the next package.

The filling machine 100 is of course equipped with various other stations and components in order to operate, however these are well known in the art and they will not be described in further detail herein. However, as can be seen in Fig. 3 the filling machine 100 is provided with a control unit 110. The control unit 110 is connected to a magnetic reader 112 and an optical reading device 114. When the web of packaging material 1 moves along the guiding path of the filling machine 100 the magnetic reader 112 and the optical reading device 114 will detect the presence of the magnetic mark 30 and the optical mark 40, and forward the read information to the control unit 110. The read information is machine-readable representation of information data and is decoded by the control unit 110 such that the information can be accessed by other functions of the filling machine 100.

Fig. 4 illustrates a package 200 for retaining a food product produced by a packaging material, such as the packaging material 1 being described previously with reference to Figs. 1 and 2a-b. Here, the packaging material 1 has been folded and sealed to form the package 200. As is shown in Fig. 4 an optical mark 40 is arranged on the package 200 (such as on a front or back side of the package 200). The optical mark 40 is formed as an optical pattern 41 of a magnetizable material also forming a magnetic mark 30. The optical mark 40 may of course also be placed on a top portion, a bottom portion or another side portion of the package 200

Examples of the optical pattern 41 will now be described with reference to Figs. 5a and 5b. As has previously been described the optical pattern 41 of the optical mark 40 forms a machine-readable representation of information data. Hence the optical mark 40 stores data in a format being readable by an optical reading device 114. A first example is shown in Fig. 5a, in which the optical pattern 41 of the optical mark 40 is provided as a bar code. The optical pattern 41 is thus formed as bars having a varying thickness, and wherein two adjacent bars are separated by a certain distance. The thickness of each bar, and the distance between two adjacent bars, form a code representing certain information which may be decoded once read by a barcode reader.

Bar codes and bar code readers are well known in the art, and will not be described further herein.

In Fig. 5b another example of an optical pattern 41 is shown. Here, the optical pattern 41 is formed as a two-dimensional optical code, or a matrix code. Existing 2D codes are e.g. Data Matrix, MaxiCode, PDF417, QR code, etc. For such code the optical reading device 114 may e.g. be camera, wherein the control unit 110 is configured to decode the image of the 2D code by appropriate decoding algorithms.

Other alternatives for the optical pattern may e.g. linear optical data tracks, which may be read by a laser and an associated control unit 110.

The flow-chart in Fig. 6 schematically illustrates a method 300 for manufacturing a packaging material 1 to be formed into a package 200 in accordance with one aspect of the invention.

In a first step 302 a support layer 3 is provided.

In a subsequent step 304 a mark 20 of magnetizable material is applied on the support layer 3. The magnetizable material is provided at least to some extent as an optical pattern to be read by an optical reading device 114 such that the mark 20, upon magnetization of the magnetizable material, forms a magnetic mark 30 and an optical mark 40.

The step 304 of applying the mark 20 typically comprises a first step 306 of applying a mark 20 not forming an optical pattern to be read by the optical reading device, and a step 308 of removing parts of said mark 20 whereby the remaining parts of said mark 20 form said optical pattern.

In a preferred embodiment the step 308 of removing parts of the mark 20 is performed by laser ablation. It has surprisingly been found that if laser ablation is performed to remove 50% of magnetizable material of the mark 20, there will only be a 15% loss of magnetic strength of the resulting magnetic mark. Also, it may be possible to obtain a very precise and sharp optical pattern using laser ablation, since it is possible to control the focus of the laser beam very accurately.

As an alternative to steps 306 and 208 the steep 304 of applying the mark is performed by applying a plurality of optically detectable structures 42 forming said optical pattern are applied to form said mark 20. This is schematically illustrated by step 310 in Fig. 6.

The method 300 may further comprise a step 312 of covering the mark 20 with a laminate layer 5.

As a final step 314, which optionally may be performed prior to step 312, the magnetizable material of the mark 20 is magnetized in order to provide a magnetic mark 30.

The following sections describe among other things, different embodiments of the different materials, such as the magnetizable material used for the magnetic mark 20, and layers of the packaging material 1. The same reference numerals as has been used in the description above will also be used in the following.

For the understanding of magnetizable marks 30 magnetizable material such as a magnetizable ink will be briefly discussed. The magnetizable ink typically comprises magnetizable particles for providing the magnetizable features of the magnetizable mark 20. The magnetizable ink typically further comprises a solvent or liquid medium to allow for a system for distributing the ink at printing conditions. The magnetizable ink can be water based, i.e. comprise in the majority water, such as at least 80 weight-% of water, preferably at leats 90%, or consist of water. The magnetizable ink may further comprise a binder, such as acrylate, styrene acrylic copolymer, polyurethane, nitrocellulose, polyamide, or latex. The binder can comprise a mix of several components, e.g. of those mentioned above, in order to give the magnetizable ink the desired properties. The desired properties are e.g. to disperse and to stabilize the magnetic particles in the magnetizable ink, to transport the magnetizable particles during printing, to give adhesion to a substrate on which the print of the magnetizable ink is made, i.e. on the support layer 3 of the packaging material 1. Further properties to be considered are protection of the magnetizable particles after printing and providing proper printing properties. For example, one component of the binder can serve as a dispersant for dispersing the magnetizable particles evenly in the magnetizable ink, while another can serve as an adhesive to the packaging material 1, etc.

The magnetizable ink can further comprise additives, such as waxes and/or antifoaming agent.

It should also be mentioned that the packaging material 1 may comprise a plurality of marks 20 of magnetizable material (indicated in Fig. 1). These marks 20 can be distributed such that there is at least one or more mark 20 per package to be formed from the packaging material 1. The marks 20 comprise magnetizable particles, e.g. being provided by a magnetizable ink as mentioned above. The marks 20 can have a variety of shapes depending on what kind of information the mark 20 is supposed to carry. The magnetizable marks 30 can e.g. be polygonal, square, rectangular, circular, oval, or have an elongated shape being oriented in a longitudinal or transversal direction of the web of the packaging material 1. The size of the mark 20 is chosen depending on the purpose; a larger mark 20 is of course able to carry more magnetization, which can be used for increasing magnetic field of a low-information carrying mark 20 which thus will be easier to read, especially under harsh signal conditions. Alternatively a larger mark 20 can be provided with more information, such as carrying information about the web of packaging material 1 or about the particular part 14 of the web. For a low-information carrying mark 20 the size may correspond to an area of 250 mm² or less, which for a square mark equals a side of about 15-16 mm, or a circular mark with a diameter of about 17-18 mm. For many applications, an area of 150 mm² or less is enough, and for some applications, an area of 25 mm² or even less may be sufficient. For a mark 20 being suitable for carrying a machine-readable representation of information data an elongated mark may be suitable. By providing the elongated mark such that it stretches along a longitudinal direction of the web of packaging material 1, sequential writing and reading of the machine-readable representation of information data is neatly enabled as the web of packaging material 1 moves during manufacturing of the web of packaging material 1 and/or finishing of the packages 200.

The printed mark 20 preferably comprises an amount of magnetic particles of between 0.5 and 4 g per m² mark area. Lower amounts may reduce the ability to provide the magnetic information, and higher amounts may only increase consumption of magnetizable ink without improving the information carrying abilities. Printing larger amounts may also be a problem, especially at high-speed printing, since the magnetizable ink may cause problems with setting-off. A preferable amount is between 1.5 and 4 g per m² to ensure information carrying abilities under various conditions. A fair trade-off of secure reading/writing, printing, and economy in ink consumption is about 2 g per m².

The positioning of an elongated mark, e.g. in the form of a spot or bar, can be positioned a predetermined distance from a longitudinal border of the web of packaging material 1, wherein the information data provided by the mark also can be used for alignment of the web of packaging material 1 in some applications. An elongated mark can be part of a strip along the web of packaging material 1, being piecewise divided such that there is at least one mark 20 present for each package 200 to be formed. The separation between two consecutive marks 20 is preferably positioned such that sealing of the package 200 to be formed is enabled at the position of the separation between the marks 20. The strip e.g. can have a mark 20 indicating the sealing position by being arranged at a predetermined distance from the sealing position.

For example, as illustrated in Fig. 1, crease lines C are made in the web of packaging material 1 for enabling a swift and reliable finishing of the package 200. Upon making the crease lines C, a mark 20, formed as a predefined magnetic field, is applied simultaneously with the making of the crease lines C. The mechanism for making the crease lines C, i.e. rolls with patterned grooves/protrusions, can be provided with a magnetizing element. The magnetized portion of the mark 20, 20' will then be ensured to be aligned with the crease lines C. The magnetic mark 30 can e.g. be a permanent magnet, or an electromagnet, for providing the magnetic field mark. When the magnet provided at the periphery of a crease roll comes in close vicinity of the magnetizable mark 30, the magnetizable particles in the mark 30 will be magnetized, and a magnetic field pattern will remain at the magnetic mark 30. Thus, a magnetic mark 30 is provided. The preparation feature can be other than the provision of crease lines, such as providing openings, perforations, etc. The alignment follows the same principle, i.e. that the magnetic mark 30 is provided simultaneously as providing the preparation feature such that the alignment will be inherent because of the structure.

Further position information that the magnetic mark 30 may hold is at the ends of a web of the packaging material 1, i.e. at the beginning and/or the end of the web of packaging material 1 such that, at splicing of the webs, the splice is allowed to be correctly aligned.

The skilled person realizes that a number of modifications of the embodiments described herein are possible without departing from the scope of the invention, which is defined in the appended claims.

For instance, the design of the packaging material 1 shown in relation to the embodiments described herein are only for illustrative purposes. Thus, the packaging material 1 may comprise partly, or completely, different portions and sub-portions. Hence, it should be noted that the present invention is directed to the predetermined optical pattern which is at least partly formed by providing a mark 20 of magnetizable material in a predetermined pattern forming a machine-readable representation of information data. This inventive idea is applicable on various packaging materials having different designs.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

## Claims

1. A packaging material (1) to be formed into a package (100), comprising:
a support layer (3),
a mark (20) comprising magnetizable material arranged on said support layer (3), wherein said magnetizable material is provided at least to some extent as an optical pattern to be read by an optical reading device (114) such that said mark (20), upon magnetization of the magnetizable material, forms a magnetic mark (30) and an optical mark (40).

2. The packaging material (1) according to claim 1, wherein said optical mark (40) comprises a plurality of optically detectable structures (43) forming said optical pattern.

3. The packaging material (1) according to claim 2, wherein said optically detectable structures (43) are visible.

4. The packaging material (1) according to claim 2 or 3, wherein said optical pattern forms a machine-readable representation of information data.

5. The packaging material according to any one of claims 2-4, wherein said optically detectable structures (43) are separated.

6. The packaging material according to claim 5, wherein said optically detectable structures (42) are separated by structures (45) being free from magnetizable material.

7. The packaging material according to claim 5, wherein said optically detectable structures (42) are separated by structures (47) formed by magnetizable material, and wherein the thickness of said separation structures (47) is less than the thickness of the optically detectable structures (43).

8. The packaging material (1) according to any one of the preceding claims, wherein the optical pattern of said optical mark (40) forms a bar code.

9. The packaging material (1) according to any one of claims 1-7, wherein the optical pattern of said optical mark (40) forms a two-dimensional code.

10. The packaging material (1) according to any one of the preceding claims, wherein said optical mark (40) extends across only a part of the mark (20) of magnetizable material.

11. The packaging material (1) according to any one of claims 1-9, wherein said optical mark (40) extends across the entire mark (20) of magnetizable material.

12. The packaging material (1) according to any one of the preceding claims, wherein said mark (20) of magnetizable material has a fixed position relative a lateral edge of said packaging material (1).

13. The packaging material (1) according to any one of claims 1-11, wherein said mark (20) of magnetizable material has a fixed position relative at least one preparation feature, such as a crease line (C), provided on said packaging material (1).

14. The packaging material (1) according to any one of the preceding claims, wherein said support layer (3) is a paperboard layer.

15. The packaging material (1) according to any one of the preceding claims, further comprising a transparent, protective layer (5), and wherein the mark (20) is covered by said laminate layer (5).

16. The packaging material (1) according to claim 15, wherein said transparent layer (5) is intended to form the exterior of the package (100) being produced by said packaging material (1).

17. The packaging material (1) according to any one of the preceding claims, wherein said magnetizable material is magnetized.

18. A package (100) for retaining a food product produced by a packaging material (1) according to any one of claims 1-17, wherein said packaging material (1) is folded and sealed to form said package (100).

19. The package (100) according to claim 18, wherein said mark (20) of magnetizable material is arranged on a top portion, a bottom portion, and/or a side portion of said package (100).

20. The package (100) according to claim 18 or 19, comprising a plurality of marks (20) of magnetizable material, wherein the magnetizable material of at least one of said marks (20) is provided at least to some extent as an optical pattern to be read by an optical reading device () such that said mark (20), upon magnetization of the magnetizable material, forms a magnetic mark (30) and an optical mark (40).

21. A method for providing a packaging material (1) to be later formed into a package (100), the method comprising:
providing a support layer (3); and
applying a mark (20) of magnetizable material on said support layer (3), whereby said magnetizable material is provided at least to some extent as an optical pattern to be read by an optical reading device (114) such that said mark (20), upon magnetization of the magnetizable material, forms a magnetic mark (30) and an optical mark (40).

22. The method according to claim 21, wherein applying said mark (20) comprises:
i) applying a mark (20) not forming an optical pattern to be read by the optical reading device, and
ii) removing parts of said mark (20) whereby the remaining parts of said mark (20) form said optical pattern.

23. The method according to claim 22, wherein removing parts of said mark (20) is performed by laser ablation.

24. The method according to claim 21, wherein a plurality of optically detectable structures (42) forming said optical pattern are applied to form said mark (20).

25. The method according to any one of claims 21-24, further comprising
covering said mark (20) with a laminate layer (5).

26. The method according to any one of claims 21-25, further comprising magnetizing the magnetizable material of said mark (20).
